(19) Europäisches Patentamt
European Patent Office
Office européen des brevets

(11) EP 4 052 553 A1

(12) EUROPEAN PATENT APPLICATION
published in accordance with Art. 153(4) EPC

(43) Date of publication:
07.09.2022 Bulletin 2022/36

(21) Application number: 20880776.8

(22) Date of filing: 27.10.2020

(51) International Patent Classification (IPC):
A01C 1/06 (2006.01)    A01P 7/04 (2006.01)
A01P 13/00 (2006.01)   A01P 3/00 (2006.01)
A01N 43/54 (2006.01)   A01N 43/60 (2006.01)
A01N 25/00 (2006.01)   A01N 25/04 (2006.01)

(52) Cooperative Patent Classification (CPC):
A01C 1/06; A01N 25/00; A01N 25/04; A01N 43/54;
A01N 43/60

(86) International application number:
PCT/JP2020/040157

(87) International publication number:
WO 2021/085396 (06.05.2021 Gazette 2021/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.10.2019 JP 2019195255

(71) Applicant: Kumiai Chemical Industry Co., Ltd.
Taito-ku
Tokyo 110-8782 (JP)

(72) Inventors:
• TATSUMI Daiki
  Tokyo 110-8782 (JP)
• OKADA Yuya
  Tokyo 110-8782 (JP)

(74) Representative: Gerauer, Marc Philippé
Kraus & Weisert
Patentanwälte PartGmbB
Thomas-Wimmer-Ring 15
80539 München (DE)

(54) **AGRICHEMICAL COMPOSITION FOR TREATING SEEDS AND USE THEREOF**

(57) Provided is an agrochemical composition for treating seeds that is for providing a technique of imparting to seeds a function to control weeds, pests, or plant diseases, the agrochemical composition for treating seeds being characterized by containing: crystal particles of an active agrochemical component having a volume median diameter of less than 1 μm; and a water-soluble polymer. Also provided are a plant seed characterized by being obtained by providing a coating of the agrochemical composition on an outer shell of a plant seed to be cultivated, and a method for cultivating a plant, the method being characterized by including disseminating the plant seed on an agricultural land or a non-agricultural land and cultivating the plant seed.

EP 4 052 553 A1

**Description**

Technical Field

The present invention relates to an agrochemical composition for treating seeds, the agrochemical composition having improved leachability of an active agrochemical component, and use of the same.

Background Art

In rice cultivation, rice seeds are typically disseminated in nursery boxes and are cultivated into young plants, which are then subjected to rice-planting (transplanting) and are cultivated until the grain-filling period.

Such rice cultivation is a hard work. Thus, for saving the labor, a technique has been proposed in which rice seeds which are coated with iron or the like to suppress floating in water are used and directly disseminated to omit the rice-planting (PTL 1).

However, even when rice seeds floating of which in water is suppressed are used and directly disseminated, it is needed to control weeds, insect pests, or diseases, and such a technique has not been known.

Citation List

Patent Literature

PTL 1: Japanese Patent No. 4441645

Summary of Invention

Technical Problem

Accordingly, the present invention has an object to provide a technique of imparting to seeds a function to control weeds, pests, or plant diseases.

Solution to Problem

As a result of intensive and extensive studies for solving the above problem, the present inventors have found that, by treating seeds with a combination of an active agrochemical component in the form of crystal particles having sizes in a certain range and a water-soluble polymer, it is possible to impart a function to control weeds, pests, or plant diseases to the seeds, completing the present invention.

Specifically, the present invention is directed to an agrochemical composition for treating seeds, the agrochemical composition being characterized by containing: crystal particles of an active agrochemical component, the crystal particles having a volume median diameter of less than 1 $\mu$m; and a water-soluble polymer.

The present invention is also directed to a plant seed characterized by being obtained by providing a coating of the agrochemical composition for treating seeds on an outer shell of a plant seed to be cultivated.

The present invention is further directed to a method for controlling a noxious organism, the method being characterized by including disseminating the plant seed in a nursery box or on an agricultural land or a non-agricultural land to control a weed, a pest, or a plant disease.

The present invention is further directed to a method for producing a plant seed, the method being characterized by including treating a plant seed to be cultivated with the agrochemical composition for treating seeds to provide a coating of the agrochemical composition for treating seeds on an outer shell of the plant seed.

The present invention is further directed to a method for cultivating a plant, the method being characterized by including disseminating the plant seed on an agricultural land or a non-agricultural land and cultivating the plant seed.

Advantageous Effects of Invention

In the agrochemical composition for treating seeds of the present invention, leaching of an active agrochemical component is facilitated by a simple technique in which the volume median diameter of crystal particles of an active agrochemical component is reduced. Thus, by treating a seed with the agrochemical composition, a function to control weeds, pests, or plant diseases can be imparted.

In the method for cultivating a plant of the present invention, weeds, pests, or plant diseases are controlled while cultivating a plant, and thus labor required for the controlling is reduced. Embodiments of Invention

The agrochemical composition for treating seeds of the present invention (hereinafter referred to as "the inventive composition") contains crystal particles of an active agrochemical component, the crystal particles having a volume median diameter of less than 1 μm, preferably 0.2 to 0.8 μm, and a water-soluble polymer. Note that, in this description, a volume median diameter refers to such a particle diameter that, when powder is divided into two at the diameter based on the volume, the volume on the larger side and the volume on the smaller side are equal. This volume median diameter is obtained, for example, as a median diameter in a volume particle size distribution measured with a laser analytic particle size distribution measuring device.

The active agrochemical component used in the inventive composition is not particularly limited as long as it can take a crystal form. Examples thereof include compounds listed below, but are not limited thereto. One of the active agrochemical components can be used or two or more thereof can be used in combination.

[Active insecticidal component]

Acrinathrin, azadirachtin, azamethiphos, azinphos-ethyl, azinphos-methyl, acequinocyl, acetamiprid, acetoprole, acephate, azocyclotin, abamectin, afidopyropen, afoxolaner, amidoflumet, amitraz, alanycarb, aldicarb, aldoxycarb, allethrin [including the d-cis-trans-form and d-trans-form], isazophos, isamidofos, isocarbophos, isoxathion, isofenphos-methyl, isoprocarb, ivermectin, imicyafos, imidacloprid, imiprothrin, indoxacarb, esfenvalerate, ethiofencarb, ethion, ethiprole, ethylene dibromide, etoxazole, etofenprox, ethoprophos, etrimfos, emamectin benzoate, endosulfan, empenthrin, oxazosulfyl, oxamyl, oxydemeton-methyl, oxydeprofos, omethoate, cadusafos, kappa-tefluthrin, kappa-bifenthrin, karanjin, cartap, carbaryl, carbosulfan, carbofuran, gamma-BHC, xylylcarb, quinalphos, kinoprene, chinomethionat, coumaphos, cryolite, clothianidin, clofentezine, chromafenozide, chlorantraniliprole, chlorethoxyfos, chlordane, chloropicrin, chlorpyrifos, chlorpyrifos-methyl, chlorfenapyr, chlorfenvinphos, chlorfluazuron, chlormephos, chloroprallethrin, cyanophos, diafenthiuron, diamidafos, cyantraniliprole, dienochlor, cyenopyrafen, dioxabenzofos, diofenolan, cyclaniliprole, dicrotophos, dichlofenthion, cycloprothrin, dichlorvos, dicloromezotiaz, 1,3-dichloropropene, dicofol, dicyclanil, disulfoton, dinotefuran, dinobuton, cyhalodiamide, cyhalothrin) [including the gamma-form and lambda-form], cyphenothrin) [including the (1R)-trans-form], cyfluthrin [including the beta-form], diflubenzuron, cyflumetofen, diflovidazin, cyhexatin, cypermethrin [including the alpha-form, beta-form, theta-form, and zeta-form], dimethylvinphos, dimefluthrin, dimethoate, silafluofen, cyromazine, spinetoram, spinosad, spirodiclofen, spirotetramat, spiromesifen, sulcofuron-sodium, sulfluramid, sulfoxaflor, sulfotep, diazinon, thiacloprid, thiamethoxam, tioxazafen, thiodicarb, thiocyclam, thiosultap, thionazin, thiofanox, thiometon, tetrachlorvinphos, tetradifon, tetraniliprole, tetramethylfluthrin, tetramethrin, tebupirimfos, tebufenozide, tebufenpyrad, tefluthrin, teflubenzuron, demeton-S-methyl, temephos, deltamethrin, terbufos, tralomethrin, transfluthrin, triazamate, triazophos, trichlorfon, triflumuron, triflumezopyrim, trimethacarb, tolfenpyrad, naled, nitenpyram, novaluron, noviflumuron, Verticillium lecanii, hydroprene, Pasteuriapenetrans spores, vamidothion, parathion, parathion-methyl, halfenprox, halofenozide, bioallethrin, bioallethrin S-cyclopentenyl, bioresmethrin, bistrifluron, hydramethylnon, bifenazate, bifenthrin, pyflubumide, piperonyl butoxide, pymetrozine, pyraclofos, pyrafluprole, pyridaphenthion, pyridaben, pyridalyl, pyrifluquinazon, pyriprole, pyriproxyfen, pirimicarb, pyrimidifen, pyriminostrobin, pirimiphos-methyl, pyrethrine, famphur, fipronil, fenazaquin, fenamiphos, fenitrothion, fenoxycarb, fenothiocarb, phenothrin [including the (1R)-trans-form], fenobucarb, fenthion, phenthoate, fenvalerate, fenpyroximate, fenbutatin oxide, fenpropathrin, fonofos, sulfuryl fluoride, butocarboxim, butoxycarboxim, buprofezin, furathiocarb, prallethrin, fluacrypyrim, fluazaindolizine, fluazuron, fluensulfone, sodium fluoroacetate, fluxametamide, flucycloxuron, flucythrinate, flusulfamide, fluvalinate [including the tau-form], flupyradifurone, flupyrazofos, flupyrimin, flufiprole, flufenerim, flufenoxystrobin, flufenoxuron, fluhexafon, flubendiamide, flumethrin, protrifenbute, prothiofos, protrifenbute, flonicamid, propaphos, propargite, profenofos, broflanilide, profluthrin, propetamphos, propoxur, flometoquin, bromopropylate, hexythiazox, hexaflumuron, Paecilomyces tenuipes, Paecilomyces fumosoroceus, heptafluthrin, heptenophos, permethrin, benclothiaz, bensultap, benzoximate, bendiocarb, benfuracarb, Beauveria tenella, Beauveria bassiana, Beauveria brongniartii, phoxim, phosalone, fosthiazate, fosthietan, phosphamidon, phosmet, polynactins, formetanate, phorate, malathion, milbemectin, mecarbam, mesulfenfos, methoprene, methomyl, metaflumizone, methamidophos, metham, methiocarb, methidathion, methyl isothiocyanate, methyl bromide, methoxychlor, methoxyfenozide, methothrin, metofluthrin, epsilonmetofluthrin, metolcarb, mevinphos, meperfluthrin, Monacrosporium phymatophagum, monocrotophos, momfluorothrin, epsilon-momfluorothrin, litlure-A, litlure-B, aluminium phosphide, zinc phosphide, phosphine, lufenuron, rescalure, resmethrin, lepimectin, rotenone, fenbutatin oxide, calcium cyanide, nicotinesulfate, (Z)-11-tetradecenyl=acetate, (Z)-11-hexadecenal, (Z)-11-hexadecenyl=acetate, (Z)-9,12-tetradecadienyl=acetate, (Z)-9-tetradecen-1-ol, (Z,E)-9,11-tetradecadienyl=acetate, (Z,E)-9,12-tetradecadienyl=acetate, Bacillus popilliae, Bacillus subtillis, Bacillus sphaericus, Bacillus thuringiensis subsp. Aizawai, Bacillus thuringiensis subsp. Israelensis, Bacillus thuringiensis subsp. Kurstaki, Bacillus thuringiensis subsp. Tenebrionis, Bt proteins (Cry1Ab, Cry1Ac, Cry1Fa, Cry2Ab, mCry3A, Cry3Ab, Cry3Bb, Cry34/35Ab1), CL900167 (code number), DCIP (bis-(2-chloro-1-methylethyl) ether), DDT (1,1,1-trichloro-2,2-bis(4-chlorophenyl)ethane), DEP (dimethyl-2,2,2-trichloro-1-hydroxyethylphosphonate), DNOC (4,6-dinitro-o-cresol), DSP (O,O-diethyl-O-[4-(dimethylsulfamoyl)phenyl]-phosphorothioate), EPN (O-ethyl-O-4-(nitrophenyl)phenylphosphonothioate), nuclear polyhedrosis virus embedded body, NA-85 (code number), NA-89 (code number), NC-515 (code number), RU15525 (code number), XMC, Z-13-icosen-10-one, ZXI8901 (code number), (RS)-2-chloro-4-fluoro-5-[5-(trifluoromethylthio)pentyloxy]phenyl 2,2,2-trifluoroethylsulfoxide (chemical name, CAS registry number: 1472050-04-6).

[Active germicidal component]

Azaconazole, acibenzolar-S-methyl, azoxystrobin, anilazine, amisulbrom, ametoctradin, aldimorph, isotianil, isopyrazam, isofetamid, isoprothiolane, ipconazole, ipfentrifluconazole, iprodione, iprovalicarb, iprobenfos, imazalil, iminoctadine-trialbesilate, iminoctadine-triacetate, imibenconazole, edifenphos, etaconazole, ethaboxam, ethirimol, ethoxyquin, etridiazole, enestroburin, enoxastrobin, epoxiconazole, organic oils, oxadixyl, oxazinylazole, oxathiapiprolin, oxycarboxin, oxine-copper, oxytetracycline, oxpoconazole-fumarate, oxolinic acid, copper dioctanoate, octhilinone, ofurace, orysastrobin, o-phenylphenol, kasugamycin, captafol, carpropamid, carbendazim, carboxin, carvone, quinoxyfen, quinofumelin, chinomethionat, captan, quinconazole, quintozene, guazatine, cufraneb, coumoxystrobin, kresoxim-methyl, clozylacon, chlozolinate, chlorothalonil, chloroneb, cyazofamid, diethofencarb, diclocymet, dichlofluanid, dichlobenthiazox, diclomezine, dicloran, dichlorophen, dithianon, diniconazole, diniconazole-M, zineb, dinocap, dipymetitrone, diphenylamine, difenoconazole, cyflufenamid, diflumetorim, cyproconazole, cyprodinil, simeconazole, dimethirimol, dimethyl disulfide, dimethomorph, cymoxanil, dimoxystrobin, ziram, silthiofam, streptomycin, spiroxamine, sedaxane, zoxamide, dazomet, tiadinil, thiabendazole, thiram, thiophanate, thiophanate-methyl, thifluzamide, tecnazene, tecloftalam, tetraconazole, debacarb, tebuconazole, tebufloquin, terbinafine, dodine, dodemorph, triadimenol, triadimefon, triazoxide, trichlamide, triclopyricarb, tricyclazole, triticonazole, tridemorph, triflumizole, trifloxystrobin, triforine, tolylfluanid, tolclofos-methyl, tolnifanide, tolprocarb, nabam, natamycin, naftifine, nitrapyrin, nitrothal-isopropyl, nuarimol, copper nonyl phenol sulphonate, Bacillus subtilis (strain: QST 713), validamycin, valifenalate, picarbutrazox, bixafen, picoxystrobin, pydiflumetofen, bitertanol, binapacryl, biphenyl, piperalin, hymexazol, pyraoxystrobin, pyraclostrobin, pyraziflumid, pyrazophos, pyrametostrobin, pyriofenone, pyrisoxazole, pyrifenox, pyributicarb, pyribencarb, pyrimethanil, pyroquilon, vinclozolin, ferbam, famoxadone, phenazine oxide, fenamidone, fenaminstrobin, fenarimol, fenoxanil, ferimzone, fenpiclonil, fenpicoxamid, fenpyrazamine, fenbuconazole, fenfuram, fenpropidin, fenpropimorph, fenhexamid, folpet, phthalide, bupirimate, fuberidazole, blasticidin-S, furametpyr, furalaxyl, furancarboxylic acid, fluazinam, fluindapyr, fluoxastrobin, fluopicolide, fluopyram, fluoroimide, fluxapyroxad, fluquinconazole, furconazole, furconazole-cis, fludioxonil, flusilazole, flusulfamide, flutianil, flutolanil, flutriafol, flufenoxystrobin, flumetover, flumorph, proquinazid, prochloraz, procymidone, prothiocarb, prothioconazole, bronopol, propamocarb-hydrochloride, propiconazole, propineb, probenazole, bromuconazole, flometoquin, hexaconazole, benalaxyl, benalaxyl-M, benodanil, benomyl, pefurazoate, penconazole, pencycuron, benzovindiflupyr, benthiazole, benthiavalicarb-isopropyl, penthiopyrad, penflufen, boscalid, fosetyl (alminium, calcium, sodium), polyoxin, polycarbamate, Bordeaux mixture, mancozeb, mandipropamid, mandestrobin, maneb, myclobutanil, mineral oils, mildiomycin, methasulfocarb, metam, metalaxyl, metalaxyl-M, metiram, metconazole, metominostrobin, metrafenone, mepanipyrim, mefentrifluconazole, meptyldinocap, mepronil, iodocarb, laminarin, phosphorous acid and salts, copper oxychloride, silver, cuprous oxide, copper hydroxide, potassium bicarbonate, sodium bicarbonate, sulfur, oxyquinoline sulfate, copper sulfate, 3,4-dichloroisothiazol-5-yl)methyl 4-(tert-butyl)benzoate (chemical name, CAS registry number: 1231214-23-5), BAF-045 (code number), BAG-010 (code number), UK-2A (code number), DBEDC (dodecylbenzenesulfonic acid bisethylenediamine copper complex salt [II]), MIF-1002 (code number), TPTA (triphenyltin acetate), TPTC (triphenyltin chloride), TPTH (triphenyltin hydroxide), nonphatogenic Erwinia carotovora.

[Active herbicidal component]

Ioxynil, aclonifen, acrolein, azafenidin, acifluorfen (including salts with sodium or the like), azimsulfuron, asulam, acetochlor, atrazine, anilofos, amicarbazone, amidosulfuron, amitrole, aminocyclopyrachlor, aminopyralid, amiprofosmethyl, ametryn, alachlor, alloxydim, isouron, isoxachlortole, isoxaflutole, isoxaben, isoproturon, ipfencarbazone, imazaquin, imazapic (including salts with an amine or the like), imazapyr (including salts with isopropyl amine or the like), imazamethabenz-methyl, imazamox, imazethapyr, imazosulfuron, indaziflam, indanofan, eglinazine-ethyl, esprocarb, ethametsulfuron-methyl, ethalfluralin, ethidimuron, ethoxysulfuron, ethoxyfen-ethyl, ethofumesate, etobenzanid, endothal-disodium, oxadiazon, oxadiargyl, oxaziclomefone, oxasulfuron, oxyfluorfen, oryzalin, orthosulfamuron, orbencarb, oleic acid, cafenstrole, carfentrazone-ethyl, karbutilate, carbetamide, quizalofop-ethyl, quizalofop-P-ethyl, quizalofop-P-tefuryl, quinoclamine, quinclorac, quinmerac, cumyluron, clacyfos, glyphosate (including salts with sodium, potassium, ammonium, amine, propylamine, isopropylamine, dimethylamine, trimesium, or the like), glufosinate (including salts with an amine, sodium, or the like), glufosinate-P-sodium, clethodim, clodinafop-propargyl, clopyralid, clomazone, chlomethoxyfen, clomeprop, cloransulam-methyl, chloramben, chloridazon, chlorimuron-ethyl, chlorsulfuron, chlorthal-dimethyl, chlorthiamid, chlorphthalim, chlorflurenol-methyl, chlorpropham, chlorbromuron, chloroxuron, chlorotoluron, ketospiradox (including salts with sodium, calcium, ammonia, or the like), saflufenacil, sarmentine, cyanazine, cyanamide, diuron, diethatyl-ethyl, dicamba (including salts with an amine, diethylamine, isopropylamine, diglycolamine, sodium, lithium, or the like), cycloate, cycloxydim, diclosulam, cyclosulfamuron, cyclopyrimorate, dichlobenil, diclofop-P-methyl, diclofop-methyl, dichlorprop, dichlorprop-P, diquat, dithiopyr, siduron, dinitramine, cinidon-ethyl, cinosulfuron, dinoseb, dinoterb, cyhalofop-butyl, diphenamid, difenzoquat, diflufenican, diflufenzopyr, simazine, dimethachlor, dimethametryn, dimethenamid, dimethenamid-P, simetryn, dimepiperate, dimefuron, cinmethylin, swep, sulcotrione, sulfentrazone, sulfosate, sulfosulfuron, sulfometuron-methyl, sethoxydim, terbacil, daimuron, thaxtomin A, dalapon, thiazopyr, tiafenacil, thiencarbazone (including sodium salt, methyl ester, and the like), tiocarbazil, thiobencarb, thidiazimin, thifensulfuron-methyl, desmedipham, desmetryne, thenylchlor, tebutam, tebuthiuron, tepraloxydim, tefuryltrione, tembotrione, terbuthylazine, terbutryn, terbumeton, topramezone, tralkoxydim, triaziflam, triasulfuron, triafamone, tri-allate, trietazine, triclopyr, triclopyr-butotyl, trifludimoxazin, tritosulfuron, triflusulfuron-methyl, trifluralin, trifloxysulfuron-sodium, tribenuron-methyl, tolpyralate, naptalam (including salts with sodium or the like), naproanilide, napropamide, napropamide-M, nicosulfuron, neburon, norflurazon, vernolate, paraquat, halauxifen-benzyl, halauxifen-methyl, haloxyfop, haloxyfop-P, haloxyfop-etotyl, halosafen, halosulfuron-methyl, picloram, picolinafen, bicyclopyrone, bispyribac-sodium, pinoxaden, bifenox, piperophos, pyraclonil, pyrasulfotole, pyrazoxyfen, pyrazosulfuron-ethyl, pyrazolynate, bilanafos, pyraflufen-ethyl, pyridafol, pyrithiobac-sodium, pyridate, pyriftalid, pyributicarb, pyribenzoxim, pyrimisulfan, pyriminobac-methyl, pyroxasulfone, pyroxsulam, phenisopham, fenuron, fenoxasulfone, fenoxaprop (including methyl, ethyl, and isopropyl esters), fenoxaprop-P (including methyl, ethyl, and isopropyl esters), fenquinotrione, fenthiaprop-ethyl, fentrazamide, phenmedipham, butachlor, butafenacil, butamifos, butylate, butenachlor, butralin, butroxydim, flazasulfuron, flamprop (including methyl, ethyl, and isopropyl esters), flamprop-M (including methyl, ethyl, and isopropyl esters), primisulfuron-methyl, fluazifop-butyl, fluazifop-P-butyl, fluazolate, fluometuron, fluoroglycofen-ethyl, flucarbazone-sodium, fluchloralin, flucetosulfuron, fluthiacet-methyl, flupyrsulfuron-methyl-sodium, flufenacet, flufenpyr-ethyl, flupropanate, flupoxame, flumioxazin, flumiclorac-pentyl, flumetsulam, fluridone, flurtamone, fluroxypyr, flurochloridone, pretilachlor, procarbazone-sodium, prodiamine, prosulfuron, prosulfocarb, propaquizafop, propachlor, propazine, propanil, propyzamide, propisochlor, propyrisulfuron, propham, profluazol, propoxycarbazone-sodium, profoxydim, bromacil, brompyrazon, prometryn, prometon, bromoxynil (including ester forms with butyric acid, octanoic acid, heptanoic acid, or the like), bromofenoxim, bromobutide, florasulam, florpyrauxifen, hexazinone, pethoxamid, benazolin, penoxsulam, heptamaloxyloglucan, beflubutamid, pebulate, pelargonic acid, bencarbazone, pendimethalin, benzfendizone, bensulide, bensulfuron-methyl, benzobicyclon, benzofenap, bentazone, pentanochlor, pentoxazone, benfluralin, benfuresate, fosamine, fomesafen, foramsulfuron, mecoprop (including salts with sodium, potassium, isopropylamine, triethanolamine, dimethylamine, or the like), mecoprop-P-potassium, mesosulfuron-methyl, mesotrione, metazachlor, metazosulfuron, methabenzthiazuron, metamitron, metamifop, DSMA (disodium methanearsonate), methiozolin, methyldymuron, metoxuron, metosulam, metsulfuron-methyl, metobromuron, metobenzuron, metolachlor, metribuzin, mefenacet, monosulfuron (including methyl, ethyl, and isopropyl esters), monolinuron, molinate, iodosulfuron, iodosulfulon-methyl-sodium, iofensulfuron, iofensulfuron-sodium, lactofen, lancotrione, linuron, rimsulfuron, lenacil, TCA (2,2,2-trichloroacetic acid) (including salts with sodium, calcium, ammonia, or the like), 2,3,6-TBA (2,3,6-trichlorobenzoic acid), 2,4,5-T (2,4,5-trichlorophenoxyacetic acid), 2,4-D (2,4-dichlorophenoxyacetic acid) (including salts with an amine, diethylamine, triethanolamine, isopropylamine, sodium, lithium, or the like), ACN (2-amino-3-chloro-1,4-naphthoquinone), MCPA (2-methyl-4-chlorophenoxyacetic acid), MCPB (2-methyl-4-chlorophonoxybutyric acid) (including sodium salt, ethyl ester, and the like), 2,4-DB (4-(2,4-dichlorophenoxy)butyric acid), DNOC (4,6-dinitro-O-cresol) (including salts with an amine, sodium, or the like), AE-F-150944 (code number), HW-02 (code number), IR-6396 (code number), MCPA-thioethyl, SYP-298 (code number), SYP-300 (code number), EPTC (S-ethyldipropylthiocarbamate), S-metolachlor).

[Active plant growth regulation component]

1-Methylcyclopropene, 1-naphthylacetamide, 2,6-diisopropylnaphthalene, 4-CPA (4-chlorophenoxyacetic acid), benzylaminopurine, ancymidol, aviglycine, carvone, chlormequat, cloprop, cloxyfonac, cloxyfonac-potassium, cyclanilide, cytokinins, daminozide, dikegulac, dimethipin, ethephon, epocholeone, ethychlozate, flumetralin, flurenol, flurprimidol, forchlorfenuron, gibberellins, inabenfide, indole acetic acid, indole butyric acid, maleic hydrazide, mefluidide, mepiquat chloride, n-decanol, paclobutrazol, prohexadione-calcium, prohydrojasmon, sintofen, thidiazuron, triacontanol, trinexapac-ethyl, uniconazole, uniconazole-P, 4-oxo-4-(2-phenylethyl)aminobutyric acid (chemical name, CAS registry number: 1083-55-2, calcium peroxide.

Among these active agrochemical components, one having an aqueous solubility of 100 ppm or less is preferred, and one having that of 0.05 to 95 ppm is more preferred. Note that the aqueous solubility is a value measured in distilled water at 20°C. Examples of the active agrochemical component having an aqueous solubility of 100 ppm or less include, but not limited to, azimsulfuron (48 ppm), ethoxysulfuron (10.5 ppm), oxadiazon (0.57 ppm), oxadiargyl (0.37 ppm), chlorimuron-ethyl (8.6 ppm), cyclosulfamuron (0.34 ppm), daimuron (0.79 ppm), triafamone (41 ppm), halosulfuron-methyl (10.2 ppm), pyraclonil (50.1 ppm), pyrazosulfuron-ethyl (9.8 ppm), pyriftalid (1.8 ppm), pyribenzoxim (3.5 ppm), pyrimisulfan (87 ppm), pyriminobac-methyl (E-form, 9.3 ppm), pyroxasulfone (3.5 ppm), fenoxasulfone (0.17 ppm), fenquinotrione (17 ppm), butachlor (16 ppm), propanil (95 ppm), propyrisulfuron (0.98 ppm), fluthiacet-methyl (0.85 ppm), pretilachlor (74 ppm), penoxsulam (4.9 ppm), bensulfuron-methyl (6.7 ppm), benzofenap (0.12 ppm), benzobicyclon (0.052 ppm), pentoxazone (0.22 ppm), Pendimethalin (0.26 ppm), metamifop (0.69 ppm), and mefenacet (5.2 ppm).

The active agrochemical components may be used as they are as long as the volume median diameter is in the above range, or the volume median diameter may be made, as required, into the above range by a pulverizing means, such as wet pulverization or dry pulverization.

The water-soluble polymer used in the inventive composition is not particularly limited, and examples thereof include polyvinyl alcohol, polyacrylic polymer, polyacrylamide, polyethylene oxide, and polyvinylpyrrolidone. One of the water-soluble polymers may be used or two or more thereof may be used in combination. Among the water-soluble polymers, polyvinylpyrrolidone is preferred because of a high leachability of the active agrochemical component.

Polyvinylpyrrolidone is known to exhibit different viscosities in an aqueous solution depending on the degree of polymerization of the vinylpyrrolidone monomer constituting the polyvinylpyrrolidone. As an index thereof, a K value expressed by the following formula (I) can be exemplified:

[Math. 1]

$$K = \frac{1.5 \log \eta_{rel} - 1}{0.15 + 0.003c} + \frac{\sqrt{300c \log \eta_{rel} + (c + 1.5c \log \eta_{rel})^2}}{0.15c + 0.003c^2} \qquad (I)$$

wherein c represents the grams of polyvinylpyrrolidone in 100 mL of a solution, and $\eta_{rel}$ represents the relative viscosity of the solution based on water.

The K value of polyvinylpyrrolidone used in the inventive composition is not particularly limited, but is generally 10 to 110, preferably 20 to 100. The K value is a viscosity value of a 1-mass% aqueous solution of the polyvinylpyrrolidone as measured at 25°C by a capillary viscometer.

The amounts of the active agrochemical component and the water-soluble polymer blended in the inventive composition are not particularly limited, but, for example, the amount of the active agrochemical component is 0.1 to 50.0 parts by mass, preferably 0.5 to 30.0 parts by mass, and the amount of the water-soluble polymer is 0.1 to 20.0 parts by mass, preferably 0.1 to 10.0 parts by mass, based on 100 parts by mass of the inventive composition. In addition, the ratio of the active agrochemical component and the water-soluble polymer blended in the inventive composition is also not particularly limited, but, for example, the ratio of the active agrochemical component and the water-soluble polymer by mass is 1:0.05 to 100.0, preferably 0.1 to 20.0.

Besides the crystal particles of the active agrochemical component having a volume median diameter of less than 1 μm and the water-soluble polymer, the inventive composition may further contain, for example, a nonionic surfactant, such as a polyalkylene glycol higher fatty acid ester, a polyoxyalkylene aryl phenyl ether, a sorbitan monoalkylate, acetylene alcohol, or acetylene diol, or an alkylene oxide adduct thereof; a cationic surfactant, such as a tetraalkylammonium salt, an alkylamine, or an alkylpyrimidinium salt; an anionic surfactant, such as an alkylarylsulfate salt, a dialkylsulfate salt, a dialkylsuccinate salt, an arylsulfonate salt or a condensate thereof, an alkylsulfate ester salt, an alkylphosphate ester salt, an alkylarylsulfate ester salt, an alkylarylphosphate ester salt, a polycarboxylate salt, a polyoxyalkylene aryl ether sulfate salt, or a polyoxyalkylene aryl ether phosphate salt; an amphoteric surfactant, such as an alkylbetaine, an alkylamine oxide, an alkylimidazolinium betaine, an amino acid, or lecithin; or another surfactant, such as a silicone surfactant or a fluorosurfactant. The amount or proportion of the surfactant blended in the inventive composition can be appropriately set by a person skilled in the art.

In addition, the inventive composition may contain, as desired, a bulking agent, such as water or an organic solvent; an efficacy improver (adjuvant), such as a polyoxyalkylene fatty acid ester, a polyoxyalkylene resin acid ester, a polyoxyalkylene alkyl aryl ether, a polyoxyalkylene alkyl ether, a polyoxyethylene/polyoxyalkylene block copolymer, a polynaphthylmethane sulfonate tetraalkylammonium salt, a paraffin-based, olefin-based, naphthene-based, aromatic, or another petroleum hydrocarbon, a polyoxyalkylene siloxane, a dialkylsulfosuccinate salt, a polyoxyalkylene alkyl ether sulfate salt, or a certain cationic surfactant, such as an alkylamine or a tetraalkylammonium salt; a thickener, such as gum arabic, xanthan gum, guar gum, tamarind gum, pectin, white carbon, talc, bentonite, or clay; an antifreezing agent, such as a water soluble substance having a relatively low molecular weight, for example, urea or sodium chloride, or a water soluble polyhydric alcohol, for example, propylene glycol, ethylene glycol, diethylene glycol, or glycerol; a defoaming agent, such as a silicone-based defoaming agent, for example, dimethylpolysiloxane or polyphenylsiloxane, or a fatty acid or a metal salt thereof, for example, myristic acid or sodium stearate; a pH modifier, such as an acidic substance, for example, sulfuric acid or potassium dihydrogen phosphate, a basic substance, for example, sodium hydroxide or calcium carbonate, or a mixture of a weak acid which exhibits a buffering capability in an aqueous solution and a conjugate base thereof, or a mixture of a weak base and a conjugate acid thereof; a preservative, such as paraben, a sorbic acid salt, 5-chloro-2-methyl-4-isothiazolin-3-one, 2-bromo-2-propane-1,3-diol, or 1,2-benzoisothiazolin-3-one; a colorant, such as a dye or a pigment; or a phytotoxicity reducing agent, such as benoxacor, furilazole, dichlormid, dicyclonone, DKA-24 (N1,N2-diallyl-N2-dichloroacetylglycine amide), AD-67 (4-dichloroacetyl-1-oxa-4-azaspiro[4.5]decane), PPG-1292 (2,2-dichloro-N-(1,3-dioxan-2-ylmethyl)-N-(2-propenyl)acetamide), R-29148 (3-dichloroacetyl-2,2,5-trimethyl-1,3-oxazolidine), cloquintcet-mexyl, 1,8-Naphthalic Anhydride, mefenpyr-diethyl, mefenpyr, mefenpyr-ethyl, fenchlorazole-O-ethyl, fenclorim, MG-191 (2-dichloromethyl-2-methyl-1,3-dioxane), cyometrinil, flurazole, fluxofenim, isoxadifen, isoxadifen-ethyl, MON4660 (code number), oxabetrinil, cyprosulfamide, a lower alkyl-substituted benzoic acid, TI-35 (code number), or N-(2-methoxybenzoyl)-4-[(methylaminocarbonyl)amino]benzenesulfonamide (chemical name, CAS registry number: 129531-12-0). The amounts or proportions of the components blended in the inventive composition can be appropriately set by a person skilled in the art.

An example of a preferred aspect of the inventive composition is shown below.

Active agrochemical component (having a volume median diameter of less than 0.01 to 1.0 $\mu$m): 0.1 to 50.0 parts by mass
Water-soluble polymer: 0.1 to 20.0 parts by mass
Surfactant: 0.1 to 30.0 parts by mass
Bulking agent: 40 to 98.5 parts by mass
Efficacy improver: 0.1 to 20.0 parts by mass
Thickener: 0.1 to 5 parts by mass
Antifreezing agent: 1.0 to 30.0 parts by mass
Defoaming agent: 0 to 1.0 parts by mass
pH Modifier: 0 to 10.0 parts by mass
Preservative: 0 to 3.0 parts by mass
Colorant: 0 to 5.0 parts by mass
Phytotoxicity reducing agent: 0 to 40.0 parts by mass

The inventive composition can be produced according to an ordinary method except for containing the above components. In addition, as for the form of the inventive composition, a form in an ordinary method, such as a granular, suspension, powder, or solution form, can be used, but a suspension form is preferred because of easiness of a treatment on seeds.

A preferred example of a method for producing the inventive composition is a method including a step of pulverizing crystal particles of an active agrochemical component into a volume median diameter of less than 1 $\mu$m and a step of mixing the crystal particles of the active agrochemical component and a water-soluble polymer before or after the pulverizing step (this method will be hereinafter referred to as "the inventive production method").

In the step of pulverizing crystal particles of an active agrochemical component into a volume median diameter of less than 1 $\mu$m in the inventive production method, the volume median diameter may be made into the above range, for example, by a pulverization means, such as dry pulverization or wet pulverization.

In addition, in the inventive production method, the step of mixing the crystal particles of the active agrochemical component and a water-soluble polymer before or after the pulverizing step may be performed, for example, by mixing with a mixing means such as stirring.

Furthermore, in the inventive production method, the pulverization step is preferably achieved by wet pulverization so that an agrochemical composition of a suspension form is obtained. The wet pulverization is not particularly limited, but, for example, is performed by an attritor, a paint shaker, or a sand grinder with a solvent such as water added. This enables to make the agrochemical composition into a suspension-form and to make the volume median diameter of crystal particles of the active agrochemical component less than 1 $\mu$m in a relatively easy manner.

With the inventive composition, the outer shell of a plant seed to be cultivated can be coated. The coating may be provided on a part of or the whole of the plant seed, but preferably on the whole thereof.

The type of the plant seed is not particularly limited as long as the seed germinates in water. Examples thereof include seeds of rice and other plants. Among such plant seeds, a rice seed is preferred.

A method for providing a coating on a plant seed is not particularly limited, but examples thereof include methods in which a plant seed is treated with the inventive composition, such as a method in which a plant seed is immersed in the inventive composition of a suspension-form, a method in which the inventive composition of a suspension-form is applied on a plant seed, and a method in which the inventive composition of a suspension-form is sprayed on a plant seed. The thickness of the coating is not particularly limited, but may be appropriately set according to the required agrochemical activity. In addition, after the treatment, the seed may appropriately be subjected to drying or the like.

Note that the plant seed is preferably coated for suppressing floating in water by an ordinary method before coated with the inventive composition. An example of such coating is an iron coating with iron.

The plant seed coated with the inventive composition can be disseminated in a nursery box or on an agricultural land or a non-agricultural land, and can be cultivated while controlling weeds, pests, or plant diseases.

In particular, when the plant seed is a rice seed coated for suppressing floating in water and further coated with the inventive composition, floating in water is suppressed and thus, the seed can be directly disseminated in a rice paddy, enabling omission of rice-planting. In addition to that, leachability of an active agrochemical component in water is improved, and thus, weeds, pests, or plant diseases can be effectively controlled.

In a plant seed coated with the inventive composition, leachability of an active agrochemical component in water is improved. Here, an improvement in leachability means that, for example, the leachability becomes 1.2 to 1.7 times larger than that in the case of using rough particles of crystal of the active agrochemical component, and 1.2 to 1.4 times larger than that in the case of using fine particles thereof.

Examples

The present invention will be described in detail below with reference to examples. The present invention is in no way limited to the examples.

Note that, in the following examples, a mean particle size refers to a median diameter in a volume particle size distribution (volume median diameter) measured with a laser analytic particle size distribution measuring device. In addition, a K value is a viscosity value of a 1-mass% solution of a polyvinylpyrrolidone measured at 25°C by a capillary viscometer. Furthermore, the existence of crystal particles was confirmed by a peak appeared at a peak position inherent in a crystal particle of each active agrochemical component when a diffraction pattern of the agrochemical composition was taken with a powder X-ray diffractometer.

Example 1

Pyrimisulfan (1.25 parts), fenquinotrione (7.5 parts), polyoxyethylene allylphenyl ether sulfate ammonium salt (0.84 parts), propylene glycol (2.8 parts), xanthan gum (0.04 parts), a mixture of CMIT, MIT, and bronopol (0.06 parts), dimethylpolysiloxane (0.01 parts), and a proper amount of water were mixed to make the entire amount into 28 parts. This mixture was subjected to wet pulverization using zirconia beads as pulverization media into a mean particle size of 0.21 $\mu$m to obtain a slurry containing pyrimisulfan and fenquinotrione. The slurry (28 parts), polyvinylpyrrolidone (K value = 27.0 to 33.0) (2 parts), and water (70 parts) were mixed to obtain an agrochemical composition of a suspension form. The pyrimisulfan and fenquinotrione in the agrochemical composition in a suspension form were in the form of crystal particles.

Comparative Example 1

Pyrimisulfan (1.25 parts), fenquinotrione (7.5 parts), polyoxyethylene allylphenyl ether sulfate ammonium salt (0.84 parts), propylene glycol (2.8 parts), xanthan gum (0.04 parts), a mixture of CMIT, MIT, and bronopol (0.06 parts), dimethylpolysiloxane (0.01 parts), and a proper amount of water were mixed to make the entire amount into 28 parts. This mixture was subjected to wet pulverization using zirconia beads as pulverization media into a mean particle size of 0.21 $\mu$m to obtain a slurry containing pyrimisulfan and fenquinotrione. The slurry (28 parts) and water (72 parts) were mixed to obtain an agrochemical composition of a suspension form. The pyrimisulfan and fenquinotrione in the agrochemical composition in a suspension form were in the form of crystal particles.

Comparative Example 2

Pyrimisulfan (1.25 parts), fenquinotrione (7.5 parts), polyoxyethylene allylphenyl ether sulfate ammonium salt (0.84 parts), propylene glycol (2.8 parts), xanthan gum (0.04 parts), a mixture of CMIT, MIT, and bronopol (0.06 parts), dimethylpolysiloxane (0.01 parts), and a proper amount of water were mixed to make the entire amount into 28 parts. This mixture was subjected to wet pulverization using glass beads as pulverization media into a mean particle size of 1.65 $\mu$m to obtain a slurry containing pyrimisulfan and fenquinotrione. The slurry (28 parts), polyvinylpyrrolidone (K value = 27.0 to 33.0) (2 parts), and water (70 parts) were mixed to obtain an agrochemical composition of a suspension form. The pyrimisulfan and fenquinotrione in the agrochemical composition in a suspension form were in the form of crystal particles.

Comparative Example 3

Pyrimisulfan (1.25 parts), fenquinotrione (7.5 parts), polyoxyethylene allylphenyl ether sulfate ammonium salt (0.84 parts), propylene glycol (2.8 parts), xanthan gum (0.04 parts), a mixture of CMIT, MIT, and bronopol (0.06 parts), dimethylpolysiloxane (0.01 parts), and a proper amount of water were mixed to make the entire amount into 28 parts. This mixture was subjected to wet pulverization using glass beads as pulverization media into a mean particle size of 1.65 $\mu$m to obtain a slurry containing pyrimisulfan and fenquinotrione. The slurry (28 parts) and water (72 parts) were mixed to obtain an agrochemical composition of a suspension form. The pyrimisulfan and fenquinotrione in the agrochemical composition in a suspension form were in the form of crystal particles.

Test Example 1

The aqueous suspended agrochemical composition of Example 1 or Comparative Examples 1-3 (0.4 g) was applied on 300 grains (about 8 g as dry unhulled rice grains before iron coating) of unhulled rice that were previously coated with iron, and was dried with air. Fifteen grains of the hulled rice after the above treatment were put in 4 L of three-degree hard water and the concentrations of pyrimisulfan and fenquinotrione in water were measured over time. The measurement results are shown in Tables 1 and 2.

[Table 1]

| Agricultural composition used | Concentration of pyrimisulfan in water (ppb) | | |
|---|---|---|---|
| | After 1 day | After 3 days | After 7 days |
| Example 1 | 59.9 | 59.9 | 59.6 |
| Comparative Example 1 | 48.5 | 53.3 | 55.1 |
| Comparative Example 2 | 44.9 | 54.1 | 55.4 |
| Comparative Example 3 | 49.7 | 55.2 | 55.6 |

[Table 2]

| Agricultural composition used | Concentration of fenquinotrion in water (ppb) | | |
|---|---|---|---|
| | After 1 day | After 3 days | After 7 days |
| Example 1 | 273.6 | 280.1 | 266.1 |
| Comparative Example 1 | 198.8 | 210.3 | 206.4 |
| Comparative Example 2 | 160.9 | 199.4 | 199.9 |
| Comparative Example 3 | 182.9 | 198.6 | 195.0 |

For both the active agrochemical components, the leached concentration was improved when the mean particle size was less than 1 $\mu$m and PVP was contained.

Industrial Applicability

The agrochemical composition for treating seeds of the present invention can be used for treating a plant seed used in the general agriculture.

**Claims**

1. An agrochemical composition for treating seeds, the agrochemical composition comprising: crystal particles of an active agrochemical component, the crystal particles having a volume median diameter of less than 1 $\mu$m; and a water-soluble polymer.

2. The agrochemical composition for treating seeds according to claim 1, wherein the active agrochemical component is contained in an amount of 0.1 to 50.0 parts by mass and the water-soluble polymer is contained in an amount of 0.1 to 20.0 parts by mass, based on 100 parts by mass of the agrochemical composition.

3. The agrochemical composition for treating seeds according to claim 1 or 2, wherein the active agrochemical component and the water-soluble polymer are contained at a mass ratio of 1:0.05 to 100.

4. The agrochemical composition for treating seeds according to any one of claims 1 to 3, wherein the active agrochemical component has an aqueous solubility of 100 ppm or less.

5. The agrochemical composition for treating seeds according to any one of claims 1 to 4, wherein the water-soluble polymer is polyvinylpyrrolidone.

6. The agrochemical composition for treating seeds according to any one of claims 1 to 5, wherein the agrochemical composition is in a suspension form.

7. A plant seed obtained by providing a coating of the agrochemical composition for treating seeds according to any one of claims 1 to 6 on an outer shell of a plant seed to be cultivated.

8. A method for controlling a noxious organism, the method comprising disseminating the plant seed according to claim 7 in a nursery box or on an agricultural land or a non-agricultural land to control a weed, a pest, or a plant disease.

9. A method for producing a plant seed, the method comprising treating a plant seed to be cultivated with the agrochemical composition for treating seeds according to any one of claims 1 to 6 to provide a coating of the agrochemical composition for treating seeds on an outer shell of the plant seed.

10. A method for cultivating a plant, the method comprising disseminating the plant seed according to claim 7 on an agricultural land or a non-agricultural land and cultivating the plant seed.

## INTERNATIONAL SEARCH REPORT

International application No.

PCT/JP2020/040157

### A. CLASSIFICATION OF SUBJECT MATTER

A01C 1/06(2006.01)i; A01P 7/04(2006.01)i; A01P 13/00(2006.01)i; A01P 3/00(2006.01)i; A01N 43/54(2006.01)i; A01N 43/60(2006.01)i; A01N 25/00(2006.01)i; A01N 25/04(2006.01)i

FI: A01C1/06 Z; A01P13/00; A01N25/00 102; A01N25/04 102; A01P3/00; A01P7/04; A01N43/54 B; A01N43/60 101

According to International Patent Classification (IPC) or to both national classification and IPC

### B. FIELDS SEARCHED

Minimum documentation searched (classification system followed by classification symbols)

A01C1/06; A01P7/04; A01P13/00; A01N25/00; A01N25/04; A01P3/00; A01N43/54; A01N43/60

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2007-513160 A (SYNGENTA PARTICIPATIONS AG.) 24 May 2007 (2007-05-24) paragraphs [0010]–[0071] | 1-4, 6-10 |
| Y | paragraphs [0010]–[0071] | 5 |
| Y | JP 2011-57629 A (SUMITOMO CHEMICAL CO., LTD.) 24 March 2011 (2011-03-24) paragraphs [0058]–[0067] | 5 |
| A | JP 2009-508824 A (SYNGENTA PARTICIPATIONS AG) 05 March 2009 (2009-03-05) paragraph [0145] | 1-10 |
| A | JP 2013-224271 A (HOKKO CHEMICAL INDUSTRY CO., LTD.) 31 October 2013 (2013-10-31) paragraph [0032] | 1-10 |
| A | JP 10-330202 A (NIPPON BAYER AGROCHEM CO., LTD.) 15 December 1998 (1998-12-15) paragraphs [0006]–[0030] | 1-10 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 November 2020 (25.11.2020) | 19 January 2021 (19.01.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT

Information on patent family members

International application No.

PCT/JP2020/040157

| Patent Documents referred in the Report | Publication Date | Patent Family | Publication Date |
|---|---|---|---|
| JP 2007-513160 A | 24 May 2007 | US 2007/0225169 A1 paragraphs [0016]-[0085] EP 1691605 A KR 10-2006-0126489 A CN 1897811 A | |
| JP 2011-57629 A | 24 Mar. 2011 | (Family: none) | |
| JP 2009-508824 A | 05 Mar. 2009 | US 2008/0206345 A1 paragraph [0154] EP 1926382 A KR 10-2008-0047404 A CN 101267738 A | |
| JP 2013-224271 A | 31 Oct. 2013 | (Family: none) | |
| JP 10-330202 A | 15 Dec. 1998 | (Family: none) | |

Form PCT/ISA/210 (patent family annex) (January 2015)

**EP 4 052 553 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4441645 B

**Non-patent literature cited in the description**

- *CHEMICAL ABSTRACTS,* 1472050-04-6
- *CHEMICAL ABSTRACTS,* 1231214-23-5
- *CHEMICAL ABSTRACTS,* 1083-55-2
- *CHEMICAL ABSTRACTS,* 129531-12-0